Europäisches Patentamt

European Patent Office

Office européen des brevets

(11) Publication number: **0 267 610**

**A2**

# EUROPEAN PATENT APPLICATION

(21) Application number: 87116723.5

(22) Date of filing: 12.11.87

(51) Int. Cl.⁴: **B29D 9/00** , B32B 27/12 , B32B 27/32 , H01B 1/12

(30) Priority: 12.11.86 JP 269334/86

(43) Date of publication of application:
18.05.88 Bulletin 88/20

(84) Designated Contracting States:
DE FR GB IT

(71) Applicant: Chisso Corporation
6-32, Nakanoshima 3-chome Kita-ku
Osaka-shi Osaka-fu(JP)

(72) Inventor: Daimon, Takashi
762-1, Yamadabashi
Ichihara-shi Chiba-ken(JP)
Inventor: Sakamoto, Hideshi
Tatsumidai Higashi 2-chome
Ichihara-shi Chiba-ken(JP)
Inventor: Adachi, Tatsuya
22-15-502, Shinozaki 2-chome Kokurakita-ku
Kitakyushu-shi Fukuoka-ken(JP)

(74) Representative: Hansen, Bernd, Dr.rer.nat. et
al
Hoffmann, Eitle & Partner Patentanwälte
Arabellastrasse 4
D-8000 München 81(DE)

(54) Process for producing electroconductive sheet.

(57) The present invention is directed to a process for producing an electroconductive sheet which is characterized by comprising the steps of laminating an electroconductive nonwoven fabric sheet composed mainly of heat-meltable fibers and an electroconductive fibers, to at least one surface of a thermoplastic resin film in a melted state; further laminating a heat-resistant plastic film to the conductive nonwoven fabric sheet; fusion-bonding, cooling and solidifying the resulting laminate; and then peeling off the heat-resistant plastic film from the laminate. In this case, the heat-resistant plastic film has a melting point which is at least 20°C higher than that of the thermoplastic resin.

EP 0 267 610 A2

**Process for Producing Electroconductive Sheet**

BACKGROUND OF THE INVENTION

1. Field of the Invention

The present invention relates to a process for producing an electroconductive sheet in which an electroconductive nonwoven fabric sheet is laminated integrally to the sheet of a thermoplastic resin.

2. Description of the Prior Art

As methods for rendering plastics electroconductivity, there are a process of blending or coating plastics with an antistatic agent, and another process of mixing carbon black, which is a conducting agent, with plastics. Although a product obtained by the former process is excellent in transparency, but a surface resistance thereof only falls to a level of about $10^{11}\Omega$ even under good conditions. In addition, this product has the drawback that a resistance value varies remarkably with an environmental humidity.

In the case of the latter process, if the content of the carbon black particles is not so great as to be continuously present in the sheet, a desired electric conductivity cannot be procured. However, the addition of a great deal of carbon black to the plastics impairs a mechanical strength of the basic resin disadvantageously. In addition, the product obtained through the latter process assumes a black tone, and therefore coloring is impossible.

As a technique for solving these conventional problems fundamentally, there is a method disclosed in Japanese Patent Provisional Publication No. 155917/1983 in which a basic material thermoplastic resin is melt-extruded and laminated to a nonwoven fabric sheet (electroconductive nonwoven fabric sheet) formed by irregularly entangling electroconductive fibers and heat-meltable fibers in each other, and the resulting laminate is then pressed integrally.

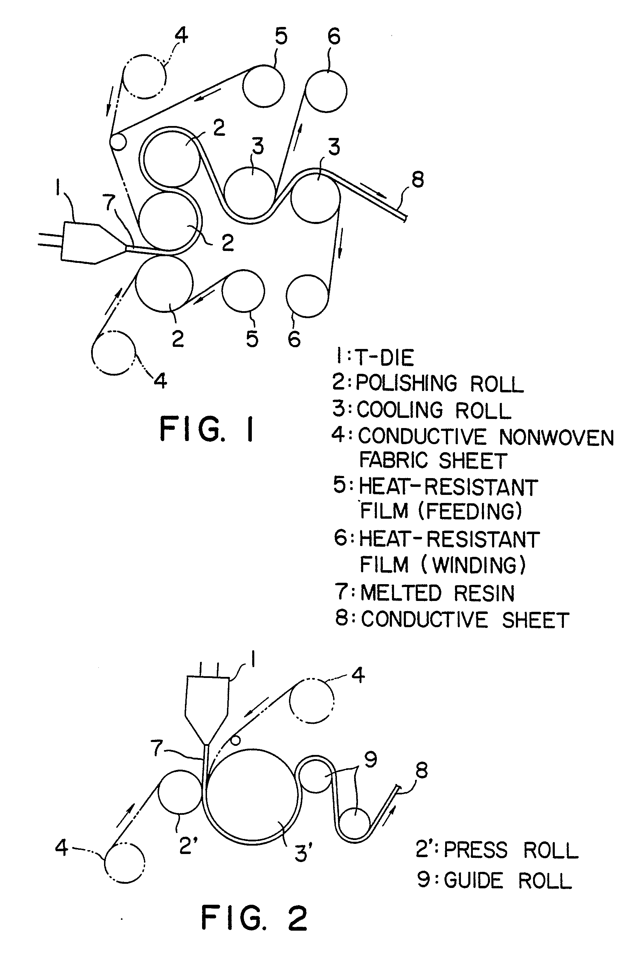

The melt extrusion of the thermoplastic resin and its lamination to another material are usually carried out by fusion-bonding under pressure and solidifying their sheets between two rolls, as shown in Fig. 2.

When the extrusion laminating method disclosed in the Japanese Patent Provisional Publication No. 155917/1983 was performed by the use of this usual roll press system, the following facts were ascertained: The sheets of the basic resin and the electroconductive nonwoven fabric sheet could be formed into one integral laminate, but the conductive fiber partially jutted out through the resin layer, with the result that the problem of hairiness occurred.

This hairiness phenomenon depresses the transparency and the appearance of the sheets, and in addition, when the sheets are scrubbed out, conductive fibrous hairs are separated off from the sheets, so that a conductive performance also deteriorates. These disadvantages impede the advancement of this method into practice.

The cause of the hairiness of the conductive fiber can be presumed as follows: When the heat-meltable fiber in the conductive nonwoven fibric sheet is brought into contact with the thermoplastic resin in a melted state and is thereby melted, heat quantity which is transmitted to the heat-meltable fibers is short at times. Alternatively, even if heat quantity is enough, the conductive fibers are not covered partially with the melted heat-meltable fiber layer and are then solidified in such a state sometimes, for example, in the case that the surfaces of the respective sheets are not flatly contacted with each other. Under such conditions, the hairiness is liable to occur.

In the usual laminating apparatus shown in Fig. 2, even when the conductive nonwoven fabric is laminated to either surface of the resin sheet, it is extremely difficult to carry out a long-period stable operation in the situation that the electroconductive fiber are perfectly embedded in the resin sheet without any hairiness, even if conditions such as temperature of the melted resin, a wall thickness of the resin sheet, a scatter of a thickness in a width direction, a drawing speed, a diameter of rolls, a surface temperature of the rolls and the like are controlled very severely. In particular, the greater the width of the sheets is and the smaller the thickness of the sheets is, the more difficult the stable operation becomes.

When the conductive nonwoven fabric is laminated to both the sides of the plastic sheet, it is more difficult to inhibit the hairiness. That is, even if the operating conditions are adjusted so that one surface of the laminate may be cooled and solidified flatly on the roll, it is impossible from the viewpoint of the structure of the apparatus to dispose another surface of the laminate simultaneously flatly on the roll (only one surface of the laminate is always contacted with the roll). Therefore, the hairiness appears on either surface of each laminate, and the practicable laminate sheets have not been manufactured.

## SUMMARY OF THE INVENTION

In order to overcome the above problems, the present invention has been contemplated. An object of the present invention is to provide a method for laminating an electroconductive nonwoven fabric sheet to either surface or both the surfaces of a plastic sheet and fusion-bonding them without any hairiness of an electroconductive fiber.

According to the present invention, there is provided a process for producing an electroconductive sheet which is characterized by comprising the steps of laminating an electroconductive nonwoven fabric sheet mainly composed mainly of heat-meltable fibers and electroconductive fibers, to at least one surface of a thermoplastic resin film in a melted state; further laminating a heat-resistant plastic film on to the conductive nonwoven fabric sheet; fusion-bonding under pressure· and solidifying the resulting laminate under cooling; and then peeling off the heat-resistant plastic film from the laminate. This process of the present invention permits providing an electroconductive sheet suitable for the package of electronic devices and parts, and with regard to the thus produced sheet, any hairiness of the conductive fiber is not present on its surface, its surface resistance value is not increased by surface friction, its surface is smooth, its transparency is maintained, if the basic resin is transparent, and its coloring is possible.

## BRIEF DESCRIPTION OF THE DRAWING

Fig. 1 is an explanatory view showing a process for producing a conductive sheet of the present invention and an apparatus used in the practice of the process; and

Fig. 2 is an explanatory view showing a conventional method for producing the conductive sheet.

## DESCRIPTION OF THE PREFERRED EMBODIMENTS

The inventors of the present application have conducted reseaches intensively with the intention of solving the above-mentioned problems, and as a result, it has been found that when a heat-resistant plastic film is laminated to the surface of an electroconductive nonwoven fabric sheet, any hairiness of the conductive fiber does not appear thereon and the conductive sheet having a good transparency can be stably and continuously manufactured. Hence, the present invention has been completed on the basis of this knowledge.

That is, the present invention is directed to a process for producing an electroconductive sheet which is characterized in that, in the process of laminating an electroconductive nonwoven fabric composed mainly of heat-meltable fibers and electroconductive fibers, to at least one surface of a basic material thermoplastic resin film in a melted state, and a heat-resistant plastic film is further laminated to the conductive nonwoven fabric sheet and then fusion-bonding under pressure and cooling and solidifying of the resulting laminate are carried out; and the heat-resistant plastic film is then peeled from the laminate sheet.

Examples of the thermoplastic resins used in the present invention include polyolefin resins such as high-density polyethylenes, intermediate-density and low-density polyethylenes, linear low-density polyethylenes and crystalline polypropylenes, polyvinyl chloride resins, polystyrene resins, acrylic resins, polyamide resins, polyethylene terephthalate resin, polybutylene terephthalate resin, polycarbonate resins, polyacetal resins, fluorocarbon resins and copolymers thereof.

Of these compounds, the crystalline polypropylenes are more preferably used.

The crystalline polypropylenes above mentioned mean not only homopolymers of propylene but also copolymers each containing 70 wt% or more of the propylene component and mixtures thereof. Examples of such copolymers include propylene-ethylene block copolymers and random copolymers, propylene-ethylene-butene-1 block copolymers and random copolymers, propylene-butene-1 random copolymers, modified polypropylenes obtained by grafting polypropylenes with an unsaturated carboxylic acid or its anhydride, and mixtures of two or more of these compounds. The crystalline polypropylenes which are used in the present invention preferably has a melt flow rate (MFR) of about 0.1 to 50 g/10 min, more

3

preferaly about 0.5 to 20 g/10 min.

Further, the crystalline polypropylenes, when used, may be mixed with another polyolefin, for example, an ethylene-propylene rubber, an ethylene-propylene-diene rubber, a poly(4-methylpentene) or an ethylene-vinyl acetate copolymer, if desired. In addition, there may be added thereto heat stabilizers, weathering stabilizers, lubricants, stripping agents, antistatic agents, nucleating agents, pigments and the like. Furthermore, flame retardants, inorganic fillers and organic fillers may be blended therewith in compliance with the purpose of a use.

The electroconductive nonwoven fabric which is used in the present invention is mainly composed of electroconductive fiber and heat-meltable fiber which can be thermally fused to the thermoplastic resin of the basic material. Examples of the heat-meltable fibers include polyolefin fibers, polyamide fibers, polyethylene terephthalate fibers, polybutylene terephthalate fibers, polyacrylate fibers, polyvinyl chloride fibers and mixtures of two or more of these fibers. The preferable examples of the thermally meltable fibers include crystalline polypropylene fibers; thermally fusible composite fibers which are each composed of two kinds of crystalline polypropylenes having different melting points, one of the two kinds being a high-melting crystalline polypropylene as a core component, another of the two kinds being a low-melting crystalline polypropylene as a sheath component; thermally fusible composite fibers in which a core component is a crystalline polypropylene and a sheath component is a polyethylene, an ethylene-vinyl acetate copolymer or an amorphous ethylene-propylene copolymer; and composite fibers in which a core component is a polyethylene terephthalate resin, a polybutylene terephthalate resin, a polyamide resin or an acrylate resin and a sheath component is a crystalline polypropylene.

Examples of the electroconductive fibers include copper-adsorbed synthetic fibers, metal-plated synthetic fibers, metal-plated glass fibers, carbon fibers, metal-coated carbon fibers, metal-deposited fibers and metallic fibers.

The conductive nonwoven fabric sheet may be obtained from the above-mentioned conductive fibers and heat-meltable fibers by means of a binder process, a needle punching process, a hydraulic entangling process of using spun bonding, a thermal adhesion process or a wet papery making process, and the preferable conductive nonwoven fabric has weight of 30 g/m² or less.

The heat-resistant plastic film used in the present invention means a film being comprised of a resin, melting point of which is at least 20°C higher than that of the thermoplastic resin. The particularly preferable heat-resistant plastic film has a high stiffness and transparency. Examples of the heat-resistant plastic films include stretched polyethylene terephthalate films, stretched plybutylene terephthalate films, stretched polyamide films, polycarbonate films and stretched polyvinyl alcohol films. A thickness of the heat-resistant plastic film is not particularly limited, but it is preferably within the range of about 0.01 to about 0.1 mm, more preferably 0.02 to 0.05 mm.

In this connection, when a film being comprised of a low-melting temperature resin is used, wrinkles take place remarkably owing to thermal shrinkage and are then transferred to the basic material, and the film is stretched due to heat and tends to break in the vicinity of polishing rolls. In the end, such a low-melting temperature film cannot be employed in the present invention.

Next, reference will be made in detail to a manufacturing method of the conductive sheet regarding the present invention. A manufacturing apparatus used in the present invention, as shown in Fig. 1, is composed of a T-die extruder which is usually used to form sheets, a polishing roll type take-off unit, a feed unit for feeding the conductive nonwoven fabric sheet and the heat-resistant plastic film to the take-off unit, and a wind-up unit for winding up the heat-resistant plastic film. In this apparatus, the usual sheets can be produced without any change in operating conditions. The polishing rolls for supporting a laminated sheet material may be replaced with optional means such as other rolls or endless belts.

In the first place, a thermoplastic resin which is the basic material is heated up to a temperature of about 200 to about 280°C in the extruder in order to melt and knead it, and is then extruded into the form of a film through the T-die. The conductive nonwoven fabric sheet and then the heat-resistant plastic film are laminated to either surface or both the surfaces of the thus extruded resin film, and the resulting laminate is then pressed by means of the polishing rolls through which a warm water having temperature of 30 to 80°C is circulated, so as to integrally stick together the basic material, the conductive nonwoven fabric and the heat-resistant plastic film. In this case, a clearance between each pair of polishing rolls should be adjusted so as to be 0.05 to 0.1 mm smaller than a wall thickness of a desired conductive sheet.

With regard to the conductive sheet of the present invention, its thickness can be regulated so as to have an optional thickness but is preferably within the range of about 0.1 to about 3.0 mm. Further, a take-off speed of the sheet during the manufacture is not particularly limited either and can be optionally decided in view of a performance and a productivity of the apparatus. After fusion-bonding and solidifying the basic material and the conductive nonwoven fabric sheet, the heat-resistant plastic film is peeled from the conductive sheet, and they are wound up separately. The heat-resistant plastic film, even if having some wrinkles, can be reused, in so far as it does not have noticeable damages or pinholes.

According to the present invention, the surface of the conductive nonwoven fabric is uniformly cooled and solidified, while brought into contact with the heat-resistant plastic film, and the conductive fiber is embedded in the resin sheet perfectly. In consequence, the thus obtained conductive sheet has the smooth surfaces having no hairiness of the conductive fibers.

Now, the present invention will be described in detail in reference to examples, but it should not be limited by these examples.

## Example 1

A propylene-ethylene block copolymer containing 8.5 wt.% of ethylene was mixed with 0.05 wt.% of 2,6-t-butyl-p-cresol, 0.10 wt.% of tetrakis[methylene(3,5-di-t-butyl-4-hydrocinnamate)]methane, 0.08 wt.% of di-stearyl-$\beta,\beta'$-thiodipropynate, 0.08 wt.% of a triazine derivative composite and 0.03 wt.% of calcium stearate in order to prepare polypropylene pellets (MFR = 0.7g/10 min).

On the other hand, a conductive nonwoven fabric sheet having weight of 10 g/m$^2$ and a width of 500 mm was made from 20 wt.% of copper-adsorbed polyacrylate fibers having a thickness of 3 denier and a length of 51 mm and 80 wt.% of a heat-meltable composite fibers which had a thickness of 3 denier and a length of 51 mm and which was composed of a crystalline polypropylene and a polyethylene.

The already prepared polypropylene pellets were melted and kneaded by an extruder having a bore diameter of 65 mm and was then extruded into the form of a film through a T-die having a width of 600 mm, a temperature of the resin being 230°C. This resin film was used as a basic material. The above conductive nonwoven fabric sheets were then laminated to both the surfaces of the basic material, and a stretched polyethylene terephthalate films having a thickness of 0.025 mm and a width of 500 mm was further laminated to the outside surfaces of the conductive nonwoven fabric. The resulting laminate which was composed of the basic film, the conductive nonwoven fabric sheet and the stretched polyethylene terephthalate film was fused integrally by means of three polishing rolls (a roll clearance was set to 0.45 mm) having a diameter of 250 mm through which warm water at 40°C was circulated. While the stretched polyester films with which the conductive nonwoven fabrics sheet were contacted were running at 5.5 m/min., cooling and solidifying were carried out, thereby obtaining a desired conductive sheet of 0.5 mm in thickness. The two stretched polyester films which had been laminated to both the surfaces of the conductive nonwoven fabric sheets were then peeled from the conductive sheet and were wound up separately. On both the surfaces of the obtained conductive sheet, any hairiness of the conductive fibers were not present. With regard to the conductive sheet, its transparency was good and its surface resistivity was within the range of 2.0 to $3.6 \times 10^4 \Omega/\square$.

## Examples 2 to 6 and Comparative Examples 1 to 5

In each of Examples 2 to 6, a polypropylene homopolymer having an isotactic pentad ratio of 0.962 and MFR = 1.8 g/10 min. was mixed with 0.10 wt.% of 2,6-di-t-butyl-p-cresol and 0.1 wt.% of calcium stearate in order to prepare polypropylene pellets.

On the other hand, a conductive nonwoven fabric sheet having a unit weight of 15 g/m$^2$ and a width of 350 mm was made from 15 wt.% of nickel-coated polyacrylate fibers having a thickness of 2 denier and a length of 51 mm and 85 wt.% of heat-meltable coposite fibers which had a thickness of 3 denier and a length of 51 mm and which was composed of a crystalline polypropylene and a polyethylene.

The already prepared polypropylene pellets were melted and kneaded by an extruder having a bore diameter of 50 mm and was then extruded into the form of a film through a T-die having a width of 450 mm, and the above conductive nonwoven fabric sheets were then laminated to both sides of the polypropylene film. Further, a biaxially stretched nylon-66 films having a thickness of 0.014 mm and a width of 350 mm were laminated on the outside surfaces of the conductive nonwoven fabric sheets. The resulting laminate which was composed of the resin film, the conductive nonwoven fabric sheets and the stretched nylon films was sticked integrally under conditions set forth in Table 1 given below, and after cooling and solidifying, the nylon-66 films were peeled and removed therefrom, thereby obtaining a desired conductive sheet. Hairiness states of the conductive fibers on the thus obtained sheets are summarized in Table 1.

Further, in Comparative Examples 1 to 5, the same procedure as in Examples 2 to 6 was repeated under conditions shown in Table 1 with the exception that the biaxially stretched nylon-66 films were not used, so that the basic material and the conductive fiber sheets were fused integrally to obtain conductive sheets.

Hairiness states of the conductive fibers on the thus obtained sheets are also set forth in Table 1.

TABLE 1

| | Temp. of Resin (°C) | Temp. of Roll Surface (°C) | Take-Off Speed (m/min) | Thickness of Sheet (mm) | Nylon Film | State of Hairiness |
|---|---|---|---|---|---|---|
| Example 2 | 240 | 80 | 5 | 0.5 | Present | Absent on both surfaces |
| Example 3 | 200 | 80 | 3 | 0.5 | do | do |
| Example 4 | 240 | 40 | 5 | 0.5 | do | do |
| Example 5 | 200 | 40 | 1.5 | 1.8 | do | do |
| Example 6 | 240 | 80 | 0.8 | 1.8 | do | do |
| Comp. Ex. 1 | 240 | 80 | 5 | 0.5 | Absent | Present on one surface |
| Comp. Ex. 2 | 200 | 80 | 3 | 0.5 | do | Present on both surfaces |
| Comp. Ex. 3 | 240 | 40 | 5 | 0.5 | do | do |
| Comp. Ex. 4 | 200 | 40 | 1.5 | 1.8 | do | Present on one surface |
| Comp. Ex. 5 | 240 | 80 | 0.8 | 1.8 | do | do |

Examples 7 to 10 and Comparative Examples 6 to 9

In each of Examples 7 to 10, a high-crystalline polypropylene homopolymer having an isotactic pentad ratio of 0.968, MFR = 0.53 g/10 min. and HMFR (230°C, load of 10.2 kgf) = 23.5 g/10 min. was mixed with 0.05 wt.% of tetrakis(2,4-di-t-butylphenyl)4,4-bisphenylene diphophonite, 0.10 wt.% of tetrakis[methylene-(3,5-di-t-butyl-4-hydroxy hydrocinnamate)]methane and 0.10 wt.% of calcium stearate in order to prepare polypropylene pellets.

The thus prepared polypropylene pellets were melted and kneaded by an extruder having a bore diameter of 65 mm and was then extruded into the form of a film through a T-die having a width of 600 mm, temperature of the resin being 250°C. Each of conductive nonwoven fabric sheets (which all had weight of 15 g/m² and a width of 550 mm) in Table 2 was then laminated to both the surfaces of the resin film, and a biaxially stretched polyethylene terephthalate films having a thickness of 0.012 mm and a width of 600 mm were further laminated on the outside surfaces of the conductive nonwoven fabric sheets. The resulting laminate which was composed of the resin film, the conductive nonwoven fabric sheets and the stretched polyester films was sticked integrally by means of three polishing rolls through which warm water at 80°C was circulated, and the resulting laminate was taken off at a speed of 2.5 m/min.. After cooling and solidifying, the polyethylene terephthalate films were peeled and removed therefrom, thereby obtaining a desired conductive sheet of 1.0 mm in thickness. Hairiness states of the conductive fibers and surface resistivities of the thus obtained sheets are summarized in Table 2.

Further, in Comparative Examples 6 to 9, the same procedure as in Examples 7 to 10 was repeated with the exception that the polyethylene terephthalate films were not used, thereby obtaining conductive polypropylene sheets. Hairiness states of the conductive fibers and surface resistivities of the thus obtained sheets are also set forth in Table 2.

## TABLE 2 (I)

### Constitution of Conductive Nonwoven Fabric

| | | Thermally Meltable Fiber | | |
| | Kind | Diameter of Fiber (denier) | Length of Fiber (mm) | Ratio of Blend (wt.%) |
|---|---|---|---|---|
| Example 7 | R-PP Fiber | 1.5 | 38 | 85 |
| Example 8 | PP/R-PP Composite Fiber | 2.0 | 51 | 90 |
| Example 9 | PP/EVA Composite Fiber | 2.0 | 51 | 90 |
| Example 10 | PET/PP Composite Fiber | 2.0 | 51 | 85 |
| Comp. Ex. 6 | R-PP Fiber | 1.5 | 38 | 85 |
| Comp. Ex. 7 | PP/R-PP Composite Fiber | 2.0 | 51 | 90 |
| Comp. Ex. 8 | PP/EVA Composite Fiber | 2.0 | 51 | 90 |
| Comp. Ex. 9 | PET/PP Composite Fiber | 2.0 | 51 | 85 |

PP: Crystalline propylene homopolymer (melting point 163°C)
R-PP: Crystalline propylene-ethylene-butene-1 random copolymer (132°C)
EVA: Ethylene-vinyl acetate copolymer
PET: Polyethylene terephthalate

0 267 610

## TABLE 2 (II)

### Constitution of Conductive Nonwoven Fabric

#### Electrically Conductive Fiber

| | Kind | Diameter of Fiber (denier) | Length of Fiber (mm) | Ratio of Blend (wt.%) |
|---|---|---|---|---|
| Example 7 | Copper-Adsorbed Polyacrylate resin Fiber | 1.5 | 51 | 15 |
| Example 8 | Pitch source Carbon Fiber | (13 μm) | 40 | 10 |
| Example 9 | Stainless Fiber | (8 μm) | 45 | 10 |
| Example 10 | Copper-Adsorbed Nylon Fiber | 2.0 | 38 | 15 |
| Comp. Ex. 6 | Copper-Adsorbed Polyacrylate resin Fiber | 1.5 | 51 | 15 |
| Comp. Ex. 7 | Pitch source Carbon Fiber | (13 μm) | 40 | 10 |
| Comp. Ex. 8 | Stainless Fiber | (8 μm) | 45 | 10 |
| Comp. Ex. 9 | Copper-Adsorbed Nylon Fiber | 2.0 | 38 | 15 |

0 267 610

## TABLE 2 (III)

|  | State of Hairiness | Surface Resistivity $(\Omega/\Box)$ |
|---|---|---|
| Example 7 | Absent on both surfaces | $9.1 \times 10^3$ |
| Example 8 | do | $7.8 \times 10^4$ |
| Example 9 | do | $4.8 \times 10^3$ |
| Example 10 | do | $6.8 \times 10^3$ |
| Comp. Ex. 6 | Present on either surface | $8.2 \times 10^3$ |
| Comp. Ex. 7 | do | $5.2 \times 10^4$ |
| Comp. Ex. 8 | do | $3.6 \times 10^3$ |
| Comp. Ex. 9 | do | $6.1 \times 10^3$ |

Note: The surface resistivity was measured on a portion where there was no hairiness.

Example 11 and Comparative Example 10

In Example 11, rigid type polyvinylchloride was melted and kneaded by an extruder having a bore diameter of 40 mm and was then extruded into the form of a film through a T-die having a width of 400 mm, a temperature of the resin being 180°C.

Electroconductive nonwoven fabric sheets having weight of 15 g/m² and a width of 350 mm were made from 20 wt.% of a nickel-plated polyacrylate fibers having a thickness of 2 denier and a length of 51 mm and 80 wt.% of a polyvinylchloride fibers having a thickness of 2 denier and a length of 51 mm.

These conductive nonwoven fabric sheets were then laminated to both sides of the polyvinylchloride film. Furhter, biaxially stretched polyester films having a thickness of 0.012 mm and a width of 400 mm were laminated on the outside surfaces of the conductive nonwoven fabric sheets.

The resulting laminate which was composed of the polyvinylchloride film, the conductive nonwoven fabric sheets, and the stretched polyethylene terephthalate films was sticked integrally by means of three polishing rolls through which hot water at 80°C was circulated.

After cooling and solidifying were carried out, the two stretched polyester films were then peeled from the conductive sheet and were wound up separately. On both the surfaces of the obtained conductive sheet, any hairiness of the conductive fibers were not present, and its surface resistivity was within the range of $10^4$-$10^5$ Ω/□ on both sides and had a good conductive property.

In comparative example 10, the same procedure as in example 11 was repeated with the exception that the biaxially stretched polyethylene terephthalate films were not used, so that the basic material and the conductive nonwoven fabric sheets were fused integrally to obtain a conductive sheet having a thickness of 0.5 mm. The surface resistivity of thus obtained sheet was within the range of $10^4$-$10^5$ Ω/□ on both sides, but the hairiness of the nickel-plated polyacrylate fibers was observed on either surface.

Example 12 and Comparative Example 11

In example 12, an acrylonitrile-butadiene-styrene resin (ABS resin) was melted and kneaded by an extruder having a bore diameter of 65 mm and was then extruded into the form of a film through a T-die having a width of 500 mm, temperature of the resin being 230°C.

Electroconductive nonwoven fabric sheets having weight of 15 g/m² and a width of 450 mm were made from 10 wt.% of a nickel-plated polyacrylate fibers having a thickness of 2 denier and a length of 51 mm and 90 wt.% of polyacrylate fibers having a thickness of 2 denier and a length of 51 mm.

These conductive nonwoven fabric sheets were then laminated to both sides of the ABS film. Further, biaxially stretched polyethylene terephthalate films having a thickness of 0.012 mm and a width of 500 mm were laminated on the outside surfaces of the conductive nonwoven fabric sheets.

The resulting laminate which was composed of the ABS resin film, the conductive nonwoven fabric sheets, and the stretched polyethylene terephthalate films was sticked integrally by means of three polishing rolls through which hot water at 90 - 100°C was circulated. Thus the conductive sheet having a thickness of 2.0 mm was obtained. After cooling and solidifying were carried out, the two stretched polyethylene terephthalate films were then peeled from the conductive sheet and were wound up separately. On both the surfaces of the obtained conductive sheet, any hairiness of the conductive fibers were not present, and its surface resistivity was $10^5$ Ω/□ on both sides and had a good conductive property.

In comparative example 11, the same procedure as in example 12 was repeated with the exception that the biaxially stretched polyethylene terephthalate films were not used, so that the basic material and the conductive nonwoven fabric sheets were fused integrally to obtain a conductive sheet having a thickness of 2.0 mm.

The surface resistivity of thus obtained sheet was $10^5$ Ω/□ being a good quality level on both sides, but the hairiness of the nickel-plated polyacrylate fibers was observed on either surface.

As shown in the examples as well as Tables 1 and 2, the electrically conductive sheet obtained under any condition by the present invention has no hairiness of the conductive fibers and can maintain a transparency inherent in the polypropylene resin which is the basic material. That is, on the conductive sheet obtained in accordance with the manufacturing process of the present invention, there is any hairiness of the conductive fibers, and therefore its surface resistance value does not decrease by the surface friction. Further, since the surface of the obtained conductive sheet is smooth, the transparency of the polypropylene resin which is the basic material can be maintained as it is, and its coloring can also be easily achieved. Moreover, since intactly keeping original characteristics (e.g., stiffness, chemical resistance and heat resistance) of the polypropylene resin, the conductive sheet can be employed for package of electronic devices, and for storage, transportation and partition of IC, LSI, print-circuit boards and the like.

## Claims

1. A process for producing an electroconductive sheet, comprising the steps of laminating an electroconductive nonwoven fabric sheet composed mainly of heat-meltable fibers and electroconductive fibers on to at least one surface of a thermoplastic resin film in melted state; further laminating a heat-resistant plastic film on to said conductive nonwoven fabric sheet, fusion-bonding those electroconductive nonwoven fabric sheet and thermoplastic film under pressure, cooling and solidifying them; and then peeling off said heat-resistant plastic film from said laminate.

2. A process for producing an electroconductive sheet according to Claim 1 wherein said heat-resistant plastic film has a melting point which is at least 20°C higher than that of said thermoplastic resin film.

3. A process for producing an electroconductive sheet according to Claim 1 wherein said fusion-bonding and solidifying are carried out by the use of a polishing roll type take-off unit.

4. A process for producing an electroconductive sheet according to Claim 1 wherein said thermoplastic resin film is a crystalline polypropylene film.

5. A process for producing an electroconductive sheet according to claim 4 wherein said crystalline polypropylene film is selected from the group consisting of films of crystalline propylene homopolymers, crystalline propylene-ethylene copolymers, crystalline propylene-ethylene-butene-1 copolymers, crystalline propylene-butene-1 copolymers, these copolymers containing 70 wt.% or more of propylene component; modified polypropylenes obtained by grafting a polypropylene with an unsaturated carboxylic acid or its anhydride; and mixtures of the foregoing.

6. A process for producing an electroconductive sheet according to Claim 1 wherein said heat-meltable fibers are a crystalline polypropylene fiber.

7. A process for producing an electroconductive sheet according to Claim 1 wherein said heat-meltable fiber comprise heat-fusible composite fibers consisting of two kinds of crystalline polypropylenes having different melting points, one of said two kinds being a crystalline polypropylene having a high melting point as a core component, another of said two kinds being a crystalline polypropylene having a low melting point as a sheath component.

8. A process for producing an electroconductive sheet according to Claim 1 wherein said heat meltable fibers are heat-fusible composite fibers in which a core component is a crystalline polypropylene and a sheath component is a polyethylene-vinyl acetate copolymer or an amorphous ethylene-propylene copolymer.

9. A process for producing an electroconductive sheet according to Claim 1 wherein said heat-meltable fibers are composite fibers in which a core component is a polyethylene terephthalate resin, a polyamide resin or a polyacrylate resin and a sheath component is a crystalline polypropylene.

13

FIG. 1

1: T-DIE
2: POLISHING ROLL
3: COOLING ROLL
4: CONDUCTIVE NONWOVEN
   FABRIC SHEET
5: HEAT-RESISTANT
   FILM (FEEDING)
6: HEAT-RESISTANT
   FILM (WINDING)
7: MELTED RESIN
8: CONDUCTIVE SHEET

2': PRESS ROLL
9: GUIDE ROLL

FIG. 2